# EUROPÄISCHE PATENTSCHRIFT

(11) **EP 1 261 998 B1**
(45) Veröffentlichungstag und Bekanntmachung des Hinweises auf die Patenterteilung: **11.04.2007**
(21) Anmeldenummer: 01911389.3
(22) Anmeldetag: 25.01.2001
(51) Int. Cl.: H01Q 1/32, H01Q 1/42, H01Q 9/42, H01Q 9/40, H01Q 15/00

(54) **FAHRZEUGAUSSENSPIEGEL MIT INTEGRIERTER ANTENNE**
VEHICLE OUTSIDE REAR-VIEW MIRROR WITH INTEGRATED ANTENNA
RETROVISEUR DE VEHICULE DOTE D'UNE ANTENNE INTEGREE

(30) Priorität: 09.02.2000 DE 10005567
(43) Veröffentlichungstag der Anmeldung: 04.12.2002
(73) Patentinhaber: ROBERT BOSCH GMBH, 70442 Stuttgart (DE)
(72) Erfinder: SCHULTZE, Ralf, 13589 Berlin (DE)
(86) Internationale Anmeldenummer: PCT/DE2001/000289
(87) Internationale Veröffentlichungsnummer: WO 2001/059878

(56) Entgegenhaltungen:
- EP-A- 0 444 679
- DE-A- 3 627 193
- DE-A- 4 003 057
- US-A- 3 165 749
- US-A- 4 958 167

## Beschreibung

Die Erfindung betrifft die Anordnung einer Antenne in einem Außenspiegel eines Kraftfahrzeugs gemäß dem Oberbegriff des Anspruchs 1.

Die Verwendung mobiler Telefone nach dem GSM-Standard (GSM: Groupe Speciale Mobile) ist mittlerweile weit verbreitet. Der Gebrauch eines solchen mobilen Telefons in einem Kraftfahrzeug während des Fahrens durch den Fahrer führt einerseits aufgrund der Ablenkung des Fahrers zu einer Erhöhung der Verkehrsgefährdung Dritter und andererseits ist ein Gebrauch eines mobilen Telefons in einem geschlossenen Kraftfahrzeug aufgrund der Abschirmung oft nicht möglich. Ferner sind Bestrebungen im Gange, den Gebrauch eines Handys im fahrenden Kraftfahrzeug durch den Fahrer zu verbieten. Daher sind für mobile Telefone zum Telefonieren innerhalb eines fahrenden Kraftfahrzeugs sogenannte Freisprecheinrichtungen erhältlich mit denen das mobile Telefon verbunden wird, wobei die Freisprecheinrichtung eine separate Antenne aufweist, die außerhalb des Kraftfahrzeugs angeordnet ist. So werden beispielsweise Systeme angeboten, bei denen die Antenne durch die Scheibe in den Rahmen eines Fensters des Kraftfahrzeuges eingeklemmt wird. Ferner kann eine weitere externe, an der Karosserie befestigte Antenne verwendet werden. Die Lösung mittels einer Klemmantenne ist umständlich zu installieren, während eine weitere Stabantenne das Aussehen und den Windwiderstand des Kraftfahrzeugs beeinträchtigt.

Aus der EP-A-0 444 679 ist eine auf einem Fahrzeug montierte Antenne flacher Bauart bekannt. Ein metallischer Antennenbügel ist dort gegenüber einer als elektrisches Gegengewicht ausgelegten Grundebene angeordnet, wobei der Antennenbügel auf seiner einen Seite mit der Grundebene und auf der anderen Seite mit dem Antennensignal verbunden ist. Der Antennenbügel bildet eine Fläche und ist als Halfloop-Antenne ausgebildet.

Die DE-A-3 627 193 zeigt eine Ringantenne bestehend aus zwei um 90° versetzten Ringen, die in den Fahrzeugaußenspiegel integriert ist.

Die DE-A-4 003 057 zeigt die Segmentierung der Spiegelmetallisierung, um diese für Mikrowellen durchlässig zu machen.

WO-A1-96/29755 beschreibt eine GSM-Fahrzeugantenne, die vorzugsweise in den inneren Rückspiegel oder in einen Außenspiegel des Fahrzeugs eingebaut ist, wobei als Antenne eine modifizierter Dipol-Antenne verwendet wird. Die Integration eines Dipols an der Seitenfläche der Kunststoffabdeckung einer Außenantenne führt jedoch einerseits wegen der Nähe des Dipols zu dem metallischen Träger der Spiegelmotoren und zu der metallischen Spiegelschicht des Spiegelglases zu keinem befriedigenden Ergebnis.

Der Erfindung liegt die Aufgabe zugrunde, einen Antennenanordnung mit einer in einem Fahrzeugaußenspiegel integrierten Antenne zu entwickeln, die für den Mobilfunk nach GSM verwendbar ist. Dabei ist eine flache horizontale Abstrahlcharakteristik mit vertikaler Polarisation erwünscht.

Diese Aufgabe wird durch die Anordnung nach Anspruch 1 gelöst. Bevorzugte Ausgestaltungen der Erfindung sind Gegenstand der abhängigen Patentansprüche.

Ein Außenspiegel eines Kraftfahrzeugs weist einen Träger auf, auf den die Motoren zur Bewegung des Rückspiegels montiert sind. Aus Stabilitätsgründen wird der Träger aus einem metallischen Material, vorzugsweise Aluminium, hergestellt. Zwischen dem im allgemeinen metallischen Träger und dem Kunststoffgehäuse des Rückspiegels wird in dem Zwischenraum eine Antennenstruktur flacher Bauform angeordnet, die eine sogenannte Groundplane, im folgenden als Grundebene bezeichnet, und einen über der Grundebene angeordneten Antennenbügel besitzt. Diese Grundebene dient als elektrisches Gegengewicht zum darüber angeordneten Antennenbügel. Ferner ist der Antennenbügel auf seiner einen Seite mit der Grundebene und auf der anderen Seite mit dem Antennensignal verbunden, wobei der Antennenbügel vorzugsweise eine Fläche bildet. Als Antenne kommt insbesondere eine Halfloop-Antenne in Betracht.

Der durch die Motoren bedingte Träger wird in einer bevorzugten Ausführungsform als Grundebene der Antenne flacher Bauart verwendet. Falls der Träger, wie dies im allgemeinen der Fall ist, aus Metall besteht, kann er direkt als Grundebene der Antenne verwendet werden. Falls der Träger jedoch aus einem nichtmetallischen Material, beispielsweise einem Kunststoffmaterial, oder einem elektrisch bzw. elektromagnetisch schlecht leitenden Material besteht, muß beispielsweise die als Grundebene verwendete Trägerfläche metallisiert, d.h. mit einer elektrisch leitenden Schicht überzogen werden, oder es muß ein zusätzliches elektrisch leitendes Teil als Grundebene eingebracht werden.

Metallische Teile, die sich im Strahlungsbereich der Antenne befinden, haben Auswirkungen auf die Strahlcharakterisik der Antenne. Insbesondere wirken sich die in einem Fahrzeugaußenspiegel befindlichen Teile, wie beispielsweise Motoren oder Kabel, auf die in einem Rückspiegel angeordnete Antenne aus. Durch die Verwendung des metallischen Trägers oder des metallisierten Trägers als elektrisches Gegengewicht zum Antennenbügel dient der Träger gleichzeitig als Abschirmung

Die Antenne flacher Bauform kann vor, über, neben, hinter oder unter dem im Außenspiegel angeordneten Träger angeordnet werden. Einen Position über dem Träger wird dabei bevorzugt, da die Abschattung durch die Karosserie des Kraftfahrzeugs in dieser Position am geringsten ist, da die Antenne in dieser erhöhten Einbauposition über die geschlossenen metallischen Flächen der Karosserie hinwegstrahlt. Dabei muß allerdings beachtet werden, daß die Antenne nicht gegen das Spiegelglas strahlt. Mit anderen Worten, die Antenne muß in einer erhöhten Position oberhalb des Spiegelglases werden angeordnet, was u.U. eine Neukonstruktion des Gehäuses des Außenspiegels bedingt. Dann läßt sich ein kreisförmiges Strahlungsdiagramm der Antenne bei einem solchen Einbauort ohne große Einbrüche realisieren.

Falls die Kontur des Außenspiegels der Form der Spiegelscheibe oder Spiegelglases folgt, strahlt die Antenne gewissermaßen gegen das Spiegelglas. Das Spiegelglas beeinflußt jedoch die Strahlungseigenschaft der Antenne negativ aufgrund der metallischen, niederohmigen Schicht des Spiegelglases. Diese metallische Schicht bewirkt eine Abschattung der von der Antenne abgestrahlten bzw. empfangenen elektromagnetischen Wellen im azimuthalen Strahlungsdiagramm der Antenne. Ferner kommt es zu einer direkten Interaktion zwischen Antennenbügel, Spiegelglas und Grundebene. Das wiederum äußert sich in einer erhöhten Abstrahlung mit horizontaler Polarisation (azimuthales Strahlungsdiagramm) sowie einer erhöhten Abstrahlung im Elevations-Strahlungsdiagramm. Es soll jedoch eine flache horizontale Abstrahlcharakteristik erzielt werden.

Vorzugsweise wird eine Entkopplung des Spiegelglases von der Antenne erreicht, in dem das Spiegelglas in voneinander isolierte Segmente unterteilt ist, so daß die niederohmig reflektierende Schicht des Spiegelglases für die hochfrequente Antennenstrahlung durchlässig ist. Vorzugsweise sind die Segmente nahe der Antenne kleiner als von der Antenne entfernte Segmente. Ferner können die Segmente untereinander in ihrer flächigen Form unähnlich sein.

Vorzugsweise wird die Unterteilung des Spiegelglases in Segmente durch eine Gitterstruktur bewirkt, wodurch die Segmente zueinander ähnlich sind. Die Gitterstruktur kann regelmäßig oder unregelmäßig sein. Bei einer unregelmäßigen Gitterstruktur nimmt der Gitterlinienabstand mit zunehmender Entfernung zur Antenne zu.

Vorzugsweise wird die Antenne im GSM-Frequenzbereich verwendet. Eine Verwendung der Antennenanordnung in anderen Frequenzbereichen, wie beispielsweise dem E-Netz oder sonstige Diensten, sind jedoch ebenfalls möglich.

Eine bevorzugte Ausführungsform der Erfindung wird nachfolgend anhand der Zeichnungen erläutert.
Fig. 1 zeigt eine schematische Darstellung einer Antenne flacher Bauform in Form einer Halfloop-Antenne,
Fig. 2 zeigt schematisch die Gitterstruktur der Spiegelfläche eines Fahrzeugaußenspiegels, und
Fig. 3 zeigt ein Richtdiagramm der erfindungsgemäßen Au-ßenspiegelantenne.

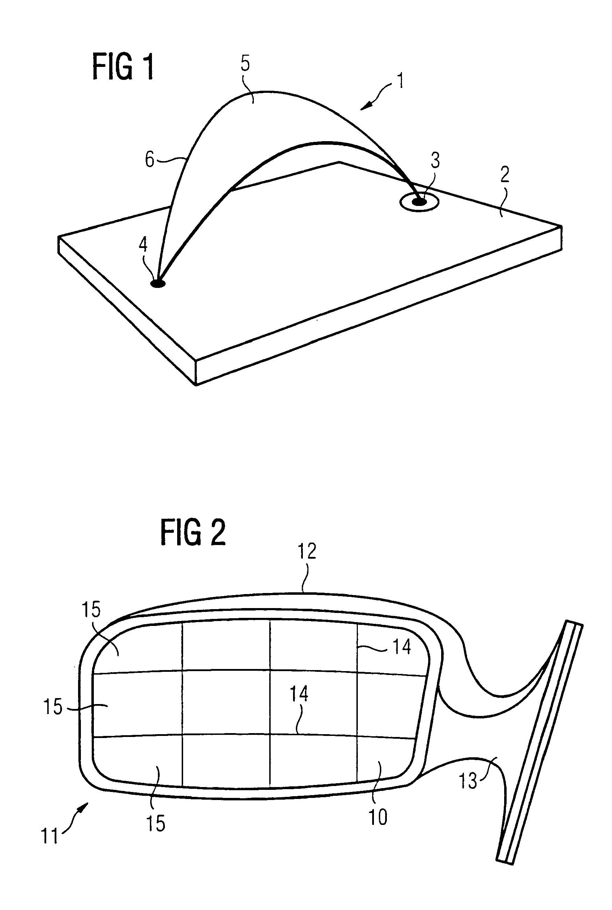

Fig. 1 zeigt das Beispiel einer in einem Außenspiegel (nicht dargestellt) integrierten Halfloop-Antenne, bestehend aus einem im allgemeinen flächigen metallischen Antennenbügel 1, der oberhalb einer Grundebene 2 angeordnet ist. Diese Grundebene 2 wird vorzugsweise durch den metallischen oder metallisierten Träger der Motoren des Spiegelglases gebildet. Am Punkt 3 des Antennenbügels 1 wird das Antennensignal eingespeist, während am Punkt 4 der Antennenbügel 1 die Grundebene 2 kontaktiert. Vorzugsweise hat die vom Rand 6 begrenzte Fläche 5 des Antennenbügels 2 in der Abwicklung die Form einer spitz zulaufenden Ellipse. Andere Formen der Fläche des Antennenbügels sind möglich und richten sich nach den räumlichen Bedingungen des Einbauortes zwischen Träger und Außenspiegelgehäuse (nicht dargestellt).

Fig. 2 zeigt in schematischer Form eine Ansicht des Spiegelglases 10 eines Außenspiegels 11 mit einem Gehäuse 12 und einer Halterung 13. Die niederohmige metallische Schicht des Spiegelglases 10, die die Reflexion der Lichtstrahlen bewirkt, ist durch eine Gitterstruktur mit Gitterlinien 14 in elektrisch voneinander isolierte Segmente 15 unterteilt. Der Abstand der Gitterlinien 14 muß nicht äquidistant sein, wie dies in Fig. 2 schematisch dargestellt ist.

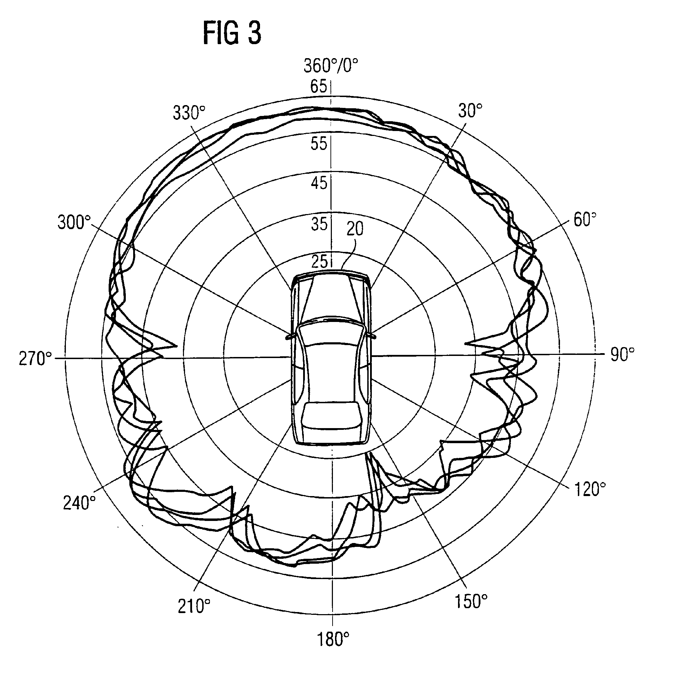

Fig. 3 zeigt das Richtdiagramm eines linken Außenspiegels mit integrierter Antenne flacher Bauform. Dabei ist der linke Au-ßenspiegel an einer Limousine 20 angebracht. Die dargestellte Messung zeigt ein im wesentlichen kreisförmiges Strahlungsdiagramm mit Einbrüchen, die von der Form des Kraftfahrzeugs, beispielsweise der Nähe des Außenspiegels zur A-Säule der Limousine, bedingt sind.

## Patentansprüche

1. Antennenanordnung mit einer in einem Fahrzeugaußenspiegel (11) angeordneten Antenne, wobei die Antenne eine Antennenstruktur flacher Bauart ist, die einen metallischen Antennenbügel (1) aufweist, der gegenüber einer als elektrisches Gegengewicht ausgelegten Grundebene (2) angeordnet ist, wobei der Antennenbügel (1) auf seiner einen Seite (4) mit der Grundebene und auf der anderen Seite (3) mit dem Antennensignal verbunden ist, **dadurch gekennzeichnet, daß** das Spiegelglas (10) des Außenspiegels (11) in voneinander isolierte Segmente (15) unterteilt ist, so daß die niederohmig reflektierende Schicht des Spiegelglases (10) für die hochfrequente Antennenstrahlung durchlässig wird und dass die Segmente (15) nahe der Antenne kleiner sind als von der Antenne entfernte Segmente (15).

2. Anordnung nach Anspruch 1, **dadurch gekennzeichnet, daß** der Antennenbügel (1) eine Fläche (5) bildet.

3. Antenne nach Anspruch 1 oder 2, **dadurch gekennzeichnet, daß** die Antenne eine Halfloop-Antenne ist.

4. Antenne nach einem der Anspruch 1 bis 3, **dadurch gekennzeichnet, daß** der Fahrzeugspiegel einen metallischen Träger zur Montage der Spiegelmotoren aufweist, der als Grundebene (2) der Antenne dient.

5. Antenne nach Anspruch 4, **dadurch gekennzeichnet, daß** der Antennenbügel (1) der Antenne oberhalb des Trägers angeordnet ist.

6. Antenne nach Anspruch 5, **dadurch gekennzeichnet, daß** die Antenne in dem Zwischenraum zwischen dem metallischen Träger und dem Kunststoffgehäuse (12) des Fahrzeugaußenspiegels (11) angeordnet ist.

7. Antenne nach Anspruch 1, **dadurch gekennzeichnet, daß** die Unterteilung des Spiegelglases (10) durch eine Gitterstruktur mit Gitterlinien (14) bewirkt wird.

8. Antenne nach Anspruch 7, **dadurch gekennzeichnet, daß** die Gitterstruktur regelmäßig ist,

9. Antenne nach Anspruch 7, **dadurch gekennzeichnet, daß** die Gitterstruktur unregelmäßig ist.

10. Antenne nach Anspruch 9, **dadurch gekennzeichnet, daß** der Abstand der Gitterlinien (14) mit zunehmender Entfernung zur Antenne zunimmt.

## Claims

1. Antenna arrangement having an antenna which is arranged in a vehicle external mirror (11), with the antenna being a flat type of antenna structure which has a metallic antenna bracket (1) which is arranged opposite a base plane (2) that is in the form of an electrical counterweight, with the antenna bracket (1) being connected on its one side (4) to the base plane and on the other side (3) to the antenna signal, **characterized in that** the mirror glass (10) of the external mirror (11) is subdivided into mutually isolated segments (15), so that the layer of the mirror glass (10) which provides low-impedance reflection allows the radio-frequency antenna radiation to pass through it, and **in that** the segments (15) close to the antenna are smaller than the segments (15) further away from the antenna.

2. Arrangement according to Claim 1, **characterized in that** the antenna bracket (1) forms a surface (5).

3. Antenna according to Claim 1 or 2, **characterized in that** the antenna is a half-loop antenna.

4. Antenna according to one of Claims 1 to 3, **characterized in that** the vehicle mirror has a metallic mount for mounting of the mirror motors, and this metallic mount is used as the base plane (2) for the antenna.

5. Antenna according to Claim 4, **characterized in that** the antenna bracket (1) of the antenna is arranged above the mount.

6. Antenna according to Claim 5, **characterized in that** the antenna is arranged in the intermediate space between the metallic mount and the plastic housing (12) of the vehicle external mirror (11).

7. Antenna according to Claim 1, **characterized in that** the mirror glass (10) is subdivided by a grid structure having grid lines (14).

8. Antenna according to Claim 7, **characterized in that** the grid structure is regular.

9. Antenna according to Claim 7, **characterized in that** the grid structure is irregular.

10. Antenna according to Claim 9, **characterized in that** the distance between the grid lines (14) increases as the distance from the antenna increases.

## Revendications

1. Installation d'antenne avec une antenne disposée dans un rétroviseur extérieur (11) d'un véhicule, l'antenne ayant une structure plate, comprenant un arceau d'antenne métallique (1), disposé en face d'un plan de base (2) conçu comme contrepoids électrique, l'arceau d'antenne (1) étant relié d'un côté (4) au plan de base et de l'autre côté (3) au signal d'antenne,
**caractérisée en ce que**
le miroir (10) du rétroviseur extérieur (11) est divisé en segments (15) isolés les uns des autres, de telle façon que la couche réfléchissante à faible résistance du miroir (10) laisse passer le rayonnement à haute fréquence de l'antenne et les segments (15) proches de l'antenne sont plus petits que ceux qui en sont éloignés.

2. Installation selon la revendication 1,
**caractérisée en ce que**
l'arceau d'antenne (1) forme une surface (5).

3. Antenne selon la revendication 1 ou 2,
**caractérisé en ce que**
l'antenne est une antenne demi-boucle.

4. Antenne selon l'une des revendications 1 à 3,
**caractérisée en ce que**
le rétroviseur de véhicule comprend un support métallique pour le montage des moteurs du miroir, servant de plan de base (2) pour l'antenne.

5. Antenne selon la revendication 4,
**caractérisée en ce que**
l'arceau d'antenne (1) est disposé au-dessus du support.

6. Antenne selon la revendication 5,
**caractérisé en ce que**
l'antenne est disposée dans l'espace intermédiaire entre le support métallique et le boîtier en plastique (12) du rétroviseur extérieur (11) du véhicule.

7. Antenne selon la revendication 1,
**caractérisée en ce que**
la subdivision du miroir (10) est réalisée par une structure de réseau avec des lignes de réseau (14).

8. Antenne selon la revendication 7,
**caractérisée en ce que**
la structure de réseau est régulière.

9. Antenne selon la revendication 7,
**caractérisée en ce que**
la structure de réseau est irrégulière.

10. Antenne selon la revendication 9,
**caractérisée en ce que**
l'espacement des lignes de réseau (14) augmente selon l'augmentation de l'éloignement par rapport à l'antenne.
